Europäisches Patentamt

European Patent Office

Office européen des brevets

(11) Publication number: **0 369 751**
**A1**

## (12) EUROPEAN PATENT APPLICATION

(21) Application number: 89311792.9

(51) Int. Cl.5: **H01J 49/02**

(22) Date of filing: **15.11.89**

(30) Priority: **15.11.88 CA 583092**

(43) Date of publication of application:
**23.05.90 Bulletin 90/21**

(84) Designated Contracting States:
**AT BE CH DE ES FR GB GR IT LI LU NL SE**

(71) Applicant: **PYLON ELECTRONIC**
**DEVELOPMENT COMPANY, LTD.**
**147 Colonnade Road**
**Nepean Ontario K2E 7L9(CA)**

(72) Inventor: **Vandrish, George Edward**
**7 Guertin Crescent**
**Aylmer Quebec J9H 4W5(CA)**
Inventor: **Landry, Jacques Yvon**
**2864 Baycrest Drive**
**Ottawa Ontario K1V PH1(CA)**
Inventor: **Davidson, Lyle Arthur**
**604-1396 Ogilvie Road**
**Gloucester Ontario K1J 8V8(CA)**

(74) Representative: **Piesold, Alexander J. et al**
**Frank B. Dehn & Co. Imperial House 15-19**
**Kingsway**
**London WC2B 6UZ(GB)**

(54) Ion mobility detector.

(57) Disclosed is an ion mobility sensor operable at atmospheric pressure comprising a tube of suitable dielectric material having an inlet (15) for receiving a sample gas and a carrier gas, a reactor region (12) for generating ions from the sample gas, a grid means (27) for separating the reactor region (12) from a drift region (14), and a plate (40) for collecting ions that traverse the drift region (14). The reactor region (12) and the drift region (14) are provided with field elements for accelerating the ions, the field elements comprising electrically conductive material disposed on the exterior of the tube. The dielectric material may be glass or ceramic material.

FIG.2

# ION MOBILITY DETECTOR

This invention relates to an ion mobility sensor.

Ion mobility sensors are known in the prior art. Briefly stated they comprise tubular structures having a reactor region, a drift region and an electrometer plate. A gas to be analyzed, together with a carrier gas such as air, is introduced into the reactor region where it is ionized, e.g. by a radioactive material contained therein. Voltages applied to a grid between the reactor region and the drift region allow samples of the ions to enter the drift region where they are accelerated by an electric drift field. The ion samples reach terminal velocity dependent on their mass and may be sorted depending on the time they take to travel from the grid to the electrometer plate at the end of the drift region.

The drift field may be produced by ring-like electrodes inside an insulating tube to which voltages are applied by leads passing through the tube. Resistors connect adjacent electrodes and a high voltage is applied between the end electrodes. The resistors create an electric field gradient along the tube.

In an alternative construction the drift tube is formed by alternating rings of metal and insulating material.

The operation of a drift tube is explained in more detail in U.S. patent 3,621,240 of Cohen, et al, issued November 16, 1971.

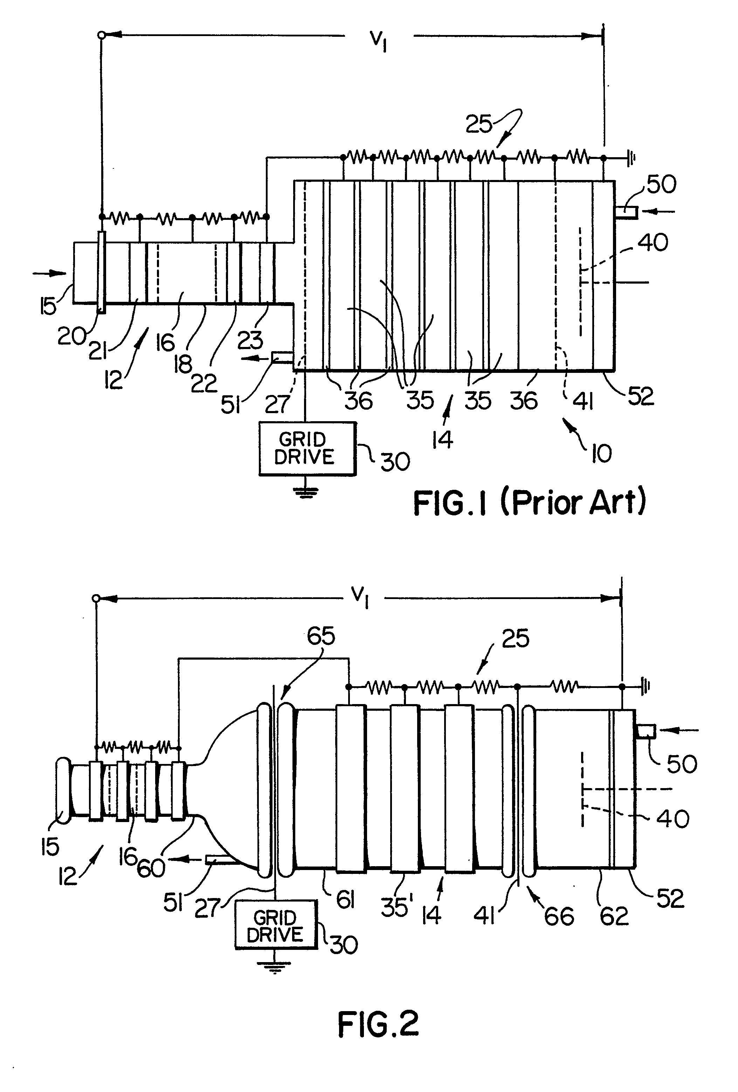

U.S. patent 3,308,323 of Van de Graaff, issued March 7, 1967, discloses a system for obtaining a voltage gradient along an evacuated tube and discusses a prior art arrangement shown in Figure 1 in which an evacuated tube 1 comprises a tubular cylindrical tube of insulating material having a helical india ink line 3 on the outer surface thereof, which provides leakage resistance and imposes on the tube 1 a uniform potential gradient when a potential difference is applied across the ends of the tube. Figure 2 shows a modification in which the helical line is inclined to the vertical. However, in the Van de Graaff system, the tube is evacuated and the ion beam is clearly defined and controlled. At atmospheric pressure, as encountered in ion mobility sensors, the ion beam spreads and ions collect on the walls of the tube. One would expect that this effect would lead to the development of localized fields which would distort the applied field and render the system unusable.

However, in accordance with the present invention, it has been discovered that an ion beam can, in fact, be readily controlled in an ion mobility sensor operating at atmospheric pressure and having field electrodes on the exterior of a tube of suitable dielectric material such as glass or ceramic. This means that the sensor can have the following advantages:

    1. It can be used at atmospheric pressure.

    2. It can be constructed simply and inexpensively.

    3. Since the tube is free of field electrodes on the interior it can be used with corrosive materials and at high temperatures, conditions which are difficult for known sensors.

    4. The interior of the sensor is easily cleaned.

Cleanout is usually by heated airstream and some times steam. The ring structure of the prior art is not usually well sealed and air leakage makes its difficult to clean quickly. In routine operation, leakage of air from outside the cell into the cell occurs. This can contaminate the airstream inside as well as increase the cleanout time.

In a preferred embodiment the interior of the cell is smooth and free of obstructions except for sealed-in grids which do not interfere with cleaning which is done with an airstream. The fact that the grids are sealed in the cell assists in directing the airstream along the length of the cell. The grids are constructed of inert materials - nickel, platinum or stainless steel depending upon the application. These materials are resistant to high temperatures and corrosive materials.

U.S. patent 4,390,784 of Browning, et al, issued June 28, 1983 discloses a one piece ion accelerator for ion mobility detector cells in which electric fields are generated by a film resistor disposed on the inside of a non-conductive tube and across which a voltage is impressed. Column 6 of that patent refers to the use of a glass fritted resistance material which upon firing forms a resistor with a glass-like surface. It is observed in the patent that the glass overcoat did not cause ions impinging on it to neutralize and destroy the fields within the drift and reactant regions, although the reasons why were not precisely known. There is no suggestion, however, that the film resistor could be placed on the outer surface of the tube.

In accordance with a broad aspect of the present invention there is provided an ion mobility sensor operable at atmospheric pressure comprising a tube of dielectric material having an inlet for receiving a sample gas and a carrier gas, a reactor region for generating ions from the sample gas, a grid means for separating said reactor region from a drift region, and a plate for collecting ions that traverse said drift region, said reactor region and said drift region being provided with electric field producing elements for accelerating said ions, said field producing elements comprising electrically conductive material disposed on the exterior of said tube and said dielectric material being of a type which does not accumulate an electric charge sufficient to significantly neutralize electric fields produced by said electric field producing elements.

Certain preferred embodiments of the invention will now be described by way of example and with reference to the accompanying drawings, in which:

Figure 1 is a sketch of an ion mobility detector according to the prior art, and

Figure 2 is a sketch of an ion mobility detector according to the present invention.

Referring to Figure 1, a prior art ion mobility sensor is generally indicated at 10. It comprises a reactor section 12 and a drift section 14, each comprising alternating rings of metal and insulating material. Sample gas, together with a carrier gas such as air, enters the reactor region at 15 where it is ionized by a band of radioactive metal 16 on the inside of the ring 18 of the reactor region. The ions are repelled towards the drift region by repeller electrode 20, to which a voltage $V_1$ is applied by means not shown, and are accelerated through the reactor region by an electric field developed by voltages applied to metal rings 20, 21, 18, 22 and 23. Voltages for the conductive rings of the reactor region and the drift tube are developed from a voltage $V_1$ applied across a resistor chain 25 and having taps connected to the metal rings as shown.

Entry of ions from the reactor region 12 to the drift region 14 is controlled by a gate or grid 27 comprising two sets of parallel wires. The grid drive 30 is adap ted to apply a different voltage to the two sets of grid wires to repel ions coming from the reactor region or to apply a pulse of common voltage to the two sets of grid wires to allow a sample of ions to pass through.

The drift region 14 comprises an alternating series of conductive rings 35 and insulating rings 36 and a conductive end cap 52. Similarly, the reactor region is made up of an alternating series of conductor rings (20, 21, 18, 22 and 23) and insulating rings. Voltages are applied from source $V_1$ to the conductive rings 35 and 20-23 via resistor chain 25 to establish an electric field gradient in drift region 14 to accelerate the ions for collection on electrometer plate 40 where each sample of ions can be detected.

A wire mesh aperture grid 41 electrically decouples the electrometer plate 40 from the control grid 27 and improves the signal resolution. A small resistor forming part of resistor chain 25 connects the aperture grid 41 to ground.

The tubular structure of Figure 1 is, as described above, formed of alternating rings of conductive and insulative material. However, as is known, conducting rings can be formed on the inside of an insulating tube to form an ion mobility sensor and, as disclosed in the above-mentioned U.S. patent 4,390,784, a continuous thick film resistor on the inside of an insulating tube can be used.

Figure 1 also shows an inlet 50 and outlet 51 for a drift gas that can be passed through the detector in a direction opposite to the direction of movement of the ions and reactor or sample gas.

Turning now to Figure 2 of the drawings, there is shown an ion mobility detector in accordance with the present invention. It functions in the same manner as the arrangement of Figure 1 and includes a number of elements in common therewith, identified by the same reference numerals, e.g. resistor chain 25, inlet 15, grid drive 30, etc. Unlike the arrangement of Figure 1, however, the tubular structure is formed of a suitable dielectric material such as glass or ceramic material with the field electrodes 35' on the outside thereof. In the case of glass, the tubular structure may be formed of three sections 60, 61 and 62 which are fused together at junctions 65 and 66. In that case the control grid 27 can be embedded in juncture 65 and aperture grid 41 can be embedded in juncture 66. Alternatively, a single continuous tube can be used, with the grids 27 and 41 located internally, connections to them being made through the wall of the tube.

In the case of ceramic material, the sections are cemented together rather than fused together.

The electrodes comprising the field elements may be metal bands or may be formed by thick film deposition. Also, the field elements may be formed as a continuous resistor strip rather than discrete bands of conductive material connected electrically by resistors.

Glass and ceramic have been found to be suitable dielectric materials for the tubular structure but it has been found that polytetrafluoroethylene (sold under the trade mark TEFLON) is not suitable; the reason why is not fully understood. The dielectric material must not polarize or neutralize the applied electric field to a significant extent. In the case of glass, it may be that a small leakage current along the length of the glass cancels any polarization effect but this is only a hypothesis and we do not wish to be limited to any particular theory regarding operation of the sensor according to the invention.

## Claims

1. An ion mobility sensor operable at atmospheric pressure comprising a tube of dielectric material having an inlet for receiving a sample gas and a carrier gas, a reactor region for generating ions from the sample gas, a grid means for separating said reactor region from a drift region, and a plate for collecting ions that traverse said drift region, said reactor region and said drift region being provided with electric field producing elements for accelerating said ions, said field producing elements comprising electrically conductive material disposed on the exterior of said tube and said dielectric material being of a type which does not accumulate an electric charge sufficient to significantly neutralize electric fields produced by said electric field producing elements.

2. A sensor as claimed in claim 1 wherein said tube is formed of glass.

3. A sensor as claimed in claim 1 wherein said tube is formed of ceramic material.

4. A sensor as claimed in claim 2 wherein said tube comprises a plurality of sections fused together.

5. A sensor as claimed in claim 4 wherein said grid is fused between adjoining ends of sections of said tube forming said reactor region and said drift region.

6. A sensor as claimed in claim 3 wherein said tube comprises a plurality of sections cemented together.

7. A sensor as claimed in claim 6 wherein said grid is cemented between adjoining ends of sections of said tube forming said reactor region and said drift region.

8. A sensor as claimed in any preceding claim wherein said electric field producing elements comprise conductive bands.

9. A sensor as claimed in claim 8 wherein adjacent conductive bands are connected by resistors.

FIG.1 (Prior Art)

FIG.2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| D,A | US-A-4 390 784 (D.R. BROWNING et al.) <br> * Column 2, lines 34-66; claim 1; figure 1 * <br> --- | 1 | H 01 J 49/02 |
| A | US-A-3 771 000 (K. WILLUTZKI) <br> * Abstract; column 2, lines 37-46; figure 1 * <br> --- | 1 | |
| A | US-A-3 793 550 (C.C. THOMPSON) <br> * Abstract; column 2, lines 52-56; figure 2 * <br> ----- | 1,9 | |

TECHNICAL FIELDS
SEARCHED (Int. Cl.5)

H 01 J
G 01 N

The present search report has been drawn up for all claims

| Place of search | Date of completion of the search | Examiner |
|---|---|---|
| THE HAGUE | 20-02-1990 | ERRANI C. |

EPO FORM 1503 03.82 (P0401)